# EUROPÄISCHE PATENTSCHRIFT

(11) **EP 1 640 141 B1**
(45) Veröffentlichungstag und Bekanntmachung des Hinweises auf die Patenterteilung: **07.11.2018**
(21) Anmeldenummer: 05019993.4
(22) Anmeldetag: 14.09.2005
(51) Int. Cl.: B29C 65/06, F16L 47/02, B29C 65/00, B23K 20/12

(54) **Vorrichtung, Anordnung und Verfahren zum Verbinden von Leitungen, Kraftfahrzeug mit einer derartigen Vorrichtung bzw. Anordnung**
Device, assembly and method for joining pipes, vehicle with such a device or assembly
Dispositif, assemblage et procédé pour joindre des tuyaux, véhicule avec un tel dispositif ou assemblage

(30) Priorität: 27.09.2004 DE 102004046797
(43) Veröffentlichungstag der Anmeldung: 29.03.2006
(73) Patentinhaber: VERITAS AG, 63571 Gelnhausen (DE)
(72) Erfinder: Hattass, Dirk, 63584 Gründau (DE); Naumann, Volker Dr., 63619 Bad Orb (DE); Kahn, Peter, 63526 Erlensee (DE)
(74) Vertreter: Patentship Patentanwaltsgesellschaft mbH

(56) Entgegenhaltungen:
- EP-A1- 0 372 663
- EP-A2- 0 405 658
- WO-A1-98/57092
- DE-A1- 19 917 071
- FR-A1- 2 737 548
- GB-A- 839 745
- JP-A- H10 138 345
- JP-A- 2003 181 928
- JP-A- 2004 100 765
- US-A- 3 980 248
- US-A- 4 047 739
- "SCHWEISSEN VON THERMOPLASTISCHEN KUNSTSTOFFEN IN DER SERIENFERTIGUNG ROTATIONSREIBSCHWEISSEN ANLAGEN, VERFAHREN, MERKMALE" 1. Februar 1994 (1994-02-01), DVS RICHTLINIE, XX, XX , XP008046287 * das ganze Dokument *

## Beschreibung

Die Erfindung bezieht sich auf eine Vorrichtung und ein Verfahren zum Verbinden von Leitungen sowie auf ein Kraftfahrzeug mit einer derartigen Vorrichtung.

Eine Vorrichtung zum Verbinden von Leitungen mit wenigstens einem Anschluss, der zur Verbindung mit einem Leitungsende durch Reibschweißen angepasst ist, ist beispielsweise aus der EP 0 988 488 B1 bekannt.

Die bekannte Vorrichtung hat den Nachteil, dass beim Verbinden der Vorrichtung mit einer Leitung Abriebspartikel gebildet werden, die in das Leitungsinnere gelangen und die Leitung verschmutzen. Die Abriebspartikel werden durch den Austritt vom beim Reibschweißen gebildeter Schmelze erzeugt, die in das Leitungsinnere als Granulat gelangt.

Derartige Verschmutzungen sind gerade bei der Verwendung von Kraftstoffleitungen besonders schädlich.

In der DE 199 17 071 A1 ist ein Reibschweißverfahren zur Herstellung eines Verbund-Gegenstandes 10, insbesondere eines Hartmetallwerkzeugs, offenbart.

In der WO 94/15137 ist eine Verbindung zwischen hohlen Rohren, die durch Einsetzen der Rohre in eine Manschette erzeugt wird, offenbart. Das Manschettensystem umfasst zwei Kragen und eine Manschette.

In der JP 10138345 ist ein Verfahren zum zerstörungsfreien Entdecken eines Defekts in einer Verbindung in einem mittels Reibschweißens mit einem Rohr verbundenen Rohrverbindungselement offenbart.

In der JP 2004-100765 A ist das Verbinden eines Verbindungstücks mit einem Schlauch durch Reibschweißen offenbart.

Der Erfindung liegt die Aufgabe zugrunde, eine Vorrichtung und ein Verfahren zum Verbinden von Leitungen anzugeben, durch die eine Verschmutzung von Leitungen beim Verbinden dieser durch Reibschweißen vermieden oder zumindest gesenkt werden kann. Ferner soll ein Kraftfahrzeug mit einer derartigen Vorrichtung angegeben werden.

Hinsichtlich der Vorrichtung und des Kraftfahrzeugs wird diese Aufgabe erfindungsgemäß jeweils durch den Gegenstand der Ansprüche 1 und 14 gelöst. Hinsichtlich des Verfahrens wird die Aufgabe durch den Gegenstand des Anspruchs 15 gelöst.

Die Erfindung hat den Vorteil, dass durch Vorsehen eines Mittels zur Abfuhr der durch das Reibschweißen erzeugbaren Schmelze aus deren Entstehungsbereich eine kontrollierte, d.h. gesteuerte Schmelzeabfuhr ermöglicht wird. Durch eine geeignete Steuerung der Schmelzeabfuhr, d.h. durch eine entsprechende Ausgestaltung der Mittel zur Schmelzeabfuhr, kann verhindert werden, dass Schmelze an den Kanten des Anschlusses austritt und als Granulat in das Leitungsinnere gelangt. Das Mittel zur Schmelzeabfuhr ermöglicht die Ausbildung einer gerichteten Schmelzebewegung, wobei der Schmelzefluss so geführt werden kann, dass keine Schmelze an die Kanten des Anschlusses gelangt und dort austreten kann. Ferner kann durch das Mittel zur Schmelzeabfuhr der Schmelzedruck beeeinflußt, insbesondere abgesenkt werden, so dass eine unkontrollierte Ausbreitung der Schmelze im Anschluss auf Grund der bei der Schmelzebildung entstehenden hohen Drücke weitgehend vermieden wird.

Im Unterschied zum Stand der Technik wird also eine unkontrollierte und richtungsmäßig undefinierte Schmelzebewegung erfindungsgemäß dadurch vermieden, dass der Anschluss Mittel zur Abfuhr der durch das Reibschweißen erzeugbaren Schmelze aus deren Entstehungsbereich aufweist. Damit ist es möglich, überschüssige Schmelze, die nicht zur Herstellung der Schweißverbindung benötigt wird, gezielt aus dem Entstehungsbereich der Schmelze so abzuführen, dass diese überschüssige Schmelze nicht an den Kanten des Anschlusses, insbesondere an der im Leitungsinneren angeordneten Kante des Anschlusses austritt.

Mit der Erfindung ist eine Vermeidung oder zumindest eine Senkung der beim Reibschweißen gebildeten Abriebspartikel erreichbar. Diese Vermeidung bzw. Senkung bedeutet eine erheblich Verbesserung der Sicherheit, insbesondere im Bereich der Kraftfahrzeugtechnik, da die für Kraftstoffleitungen beim Reibschweißen hervorgerufenen schädlichen Verschmutzungen nicht mehr oder nur in geringerem Maße auftreten.

Ferner erleichtert die Erfindung eine Automatisierung der Herstellung von Leitungsverbindungen mittels Reibschweißen, da die bisher nach dem Reibschweißen erforderlich Reinigung der Leitungen entfällt.

Vorzugsweise umfasst der Anschluss wenigstens eine Ausnehmung, die zumindest abschnittsweise im wesentlichen in Längsrichtung des Anschlusses erstreckt ist. Die im wesentlichen in Längsrichtung des Anschlusses erstreckte wenigstens eine Ausnehmung ermöglicht eine Kanalisierung des aus dem Entstehungsbereich der Schmelze abgeführten Schmelzeüberschusses. Durch die Kanalisierung kann zum einen der Schmelzedruck gesenkt werden. Zum anderen kann die Ausbreitungsrichtung der Schmelze gesteuert werden. Im erstarrten Zustand bildet die in die Ausnehmung geströmte Schmelze eine Verbindung zwischen dem Anschluss und der Leitung, wodurch die Festigkeit der gesamten Verbindung erhöht wird.

In einer weiteren bevorzugten Ausführungsform der Erfindung ist die wenigstens eine Ausnehmung parallel zur Längsrichtung des Anschlusses erstreckt. Diese Ausgestaltung der Erfindung ermöglicht eine besonders einfache Fertigung der Vorrichtung, da die parallel zur Längsrichtung des Anschlusses erstreckte Ausnehmung einfach durch entsprechendes Spritzgießen oder Extrudieren des Anschlusses hergestellt werden kann.

Die wenigstens eine Ausnehmung kann auch unter einem Winkel zur Längsrichtung des Anschlusses erstreckt sein, wodurch ein längerer Fließweg für die Schmelze gebildet wird, so dass größere Schmelzemengen aus dem Entstehungsbereich der Schmelze, d.h. aus der Schweißzone, abgeführt werden können.

Ferner ist es möglich, die wenigstens eine Ausnehmung spiralförmig auszubilden. Auf diese Weise wird ein noch längerer Fließweg für die Schmelze geschaffen, um eine noch größere Schmelzemenge abzuführen und in der Ausnehmung aufnehmen zu können.

In einer weiteren bevorzugten Ausführungsform der Erfindung sind zwei, drei oder vier Ausnehmungen äquidistant beabstandet auf dem Umfang des Anschlusses angeordnet. Die Anordnung mehrerer Ausnehmungen ermöglicht die Abfuhr einer größeren Schmelzemenge, wobei aufgrund der äquidistanten Beabstandung der Ausnehmungen auf dem Umfang des Anschlusses eine gleichmäßige Schmelzeabfuhr gewährleistet wird.

Der Anschluss kann einen Innenstutzen aufweisen, in dessen Außenfläche die wenigstens eine Ausnehmung vorgesehen ist. Alternativ oder zusätzlich zu dieser Ausführungsform kann der Anschluss einen Außenstutzen aufweisen, in dessen Innenfläche wenigstens eine Ausnehmung vorgesehen ist. Diese Ausführungsformen ermöglichen die Implementierung der Erfindung in verschiedenen Bautypen von Quick-Connectoren.

In einer weiteren bevorzugten Ausführungsform der Erfindung weist der Anschluss wenigstens eine taschenförmige Ausnehmung auf, die mit dem Entstehungsbereich zur Aufnahme von Schmelze verbunden ist. Die Ausbildung wenigstens einer taschenförmigen Ausbildung bildet eine weitere Möglichkeit, überflüssige Schmelze aus dem Entstehungsbereich der Schmelze abzuführen, wobei durch das Volumen der taschenförmigen Ausnehmung die Menge der abgeführten Schmelze gesteuert werden kann. Die wenigstens eine taschenförmige Ausnehmung kann mit der wenigstens einen im wesentlichen in Längsrichtung des Anschlusses erstreckten Ausnehmungen kombiniert werden.

Der Anschluss weist wenigstens eine radiale Öffnung auf, die einen Innenraum eines Anschlusses mit einer Außenfläche des Anschlusses verbindet. Durch die wenigstens eine radiale Öffnung kann beim Reibschweißen Luft aus dem Innenraum des Anschlusses entweichen, so dass vermieden wird, dass der Druck im Innenraum auf Grund komprimierter Luft ansteigt. Aufgrund dieses Druckabbaus wird ein Herauspressen der Schmelze aus dem Innenraum vermieden. Außerdem kann überschüssige Schmelze, die nicht zur Bildung der Schweißverbindung benötigt wird, durch die wenigstens eine radiale Öffnung aus dem Innenraum des Anschlusses abgeführt werden, so dass der Schmelzedruck im Innenraum sinkt und zumindest der durch die wenigstens eine radiale Öffnung nach außen abgeführte Teil der Schmelze nicht in das Leitungsinnere gelangen kann.

Die radiale Öffnung verbindet einen in Einsteckrichtung hinteren Bereich des Innenraums des Anschlusses mit dessen Außenfläche. Da insbesondere in diesem hinteren Bereich des Innenraums der Großteil der Schmelze gebildet werden sollte, kann überschüssige Schmelze besonders wirksam abgeführt werden, wenn in diesem hinteren Bereich die radiale Öffnung angeordnet ist.

Es ist zweckmäßig, wenn mehrere, insbesondere zwei, drei oder vier radiale Öffnungen äquidistant beabstandet auf dem Umfang des Anschlusses angeordnet sind, da dadurch eine gleichmäßige Abfuhr einer größeren Schmelzemenge aus dem Innenraum des Anschlusses nach außen ermöglicht wird.

Nach einer weiteren vorteilhaften Ausführungsform der Erfindung weist der Anschluss Mittel zur Steuerung des Entstehungsbereiches der durch das Reibschweißen erzeugbaren Schmelze auf. Die Kombination der gezielten Abfuhr überschüssiger Schmelze mit der Steuerung des Entstehungsbereiches der durch das Reibschweißen erzeugbaren Schmelze wird auf besonders wirkungsvolle Weise vermieden, dass Schmelze an den Kanten des Anschlusses austritt und in das Leitungsinnere gelangen kann. Durch das Steuern des Entstehungsbereiches der beim Reibschweißen entstehenden Schmelze kann die Aufschmelzstelle, d.h. die Schweißzone örtlich verlagert werden. Durch die lokale Veränderung der Schweißstelle im Zusammenwirken mit der gezielten Abfuhr überschüssiger Schmelze kann der Entstehungsbereich der Schmelze an solche Stellen im Anschluss verlagert werden, die im Hinblick auf eine Vermeidung von Schmelzeaustritt in das Leitungsinnere günstig sind, wobei gleichzeitig eine Abfuhr überschüssiger Schmelze erfolgt, die sicherstellt, dass diese überschüssige Schmelze an unkritische Bereiche im Anschluss geleitet wird. Dadurch wird die angestrebte Wirkung, den Schmelzeaustritt in das Leitungsinnere zu unterbinden, noch besser gewährleistet.

Vorzugsweise weist der Anschluss einen Innenstutzen auf, dessen Außenfläche zumindest bereichsweise mit einem Gleitmittel versehen ist. Alternativ oder zusätzlich kann der Anschluss einen Außenstutzen aufweisen, dessen Innenfläche mit dem Gleitmittel zumindest bereichsweise versehen ist. Dadurch wird ermöglicht, entweder nur ein Verschweißen an der Innenfläche des Außenstutzens oder nur an der Außenfläche des Innenstutzens zu erreichen, wenn die jeweils andere Fläche mit dem Gleitmittel versehen ist, und dadurch die Reibung an dieser Fläche verringert wird. Außerdem können die jeweiligen Flächen nur teilweise mit dem Gleitmittel versehen sein, so dass nur die gleitmittelfreien Bereiche der jeweiligen Flächen aufgrund der höheren Reibung miteinander verschweißen.

Nach einer bevorzugten Ausführungsform des erfindungsgemäßen Verfahrens kann vorgesehen sein, dass die Schmelze beim Abführen durch wenigstens eine Ausnehmung im Anschluss im wesentlichen in Längsrichtung des Anschlusses kanalisiert wird. Durch die Kanalisierung der überschüssigen Schmelze wird ein unkontrolliertes Ausbreiten der Schmelze mit hohem Druck im Inneren des Anschlusses verhindert. Durch die Kanalisierung wird vielmehr erreicht, dass die Schmelze in einer vorgegebenen Richtung geführt wird, wobei der Schmelzedruck abgesenkt wird, so dass es insgesamt zu einer weniger starken Ausbreitung der Schmelze kommt. Dadurch wird verhindert, dass die Schmelze an den Anschlusskanten austritt.

Alternativ oder zusätzlich kann vorgesehen sein, dass der Anschluss beim Reibschweißen zum Druckabbau belüftet wird, wodurch ein Herauspressen der Schmelze aus dem Anschluss verringert wird.

Auch im Hinblick auf das Verfahren kann das Abführen überschüssiger Schmelze aus dem Entstehungsbereich der beim Reibschweißen gebildeten Schmelze mit einem Steuern dieses Entstehungsbereiches kombiniert werden. Die dadurch ermöglichte örtliche Verlagerung der Aufschmelzstelle zusammen mit der gezielten Abfuhr der überschüssigen Schmelze gewährleistet noch sicherer, dass keine Schmelze an den Kanten des Anschlusses nach außen tritt.

In einer bevorzugten Ausführungsform des erfindungsgemäßen Verfahrens wird ein Anpressdruck zwischen dem Leitungsende und dem Anschluss im wesentlichen lokal im Entstehungsbereich der Schmelze erzeugt. Der gezielte Erzeugung des Anpressdrucks erlaubt auf einfache Weise eine örtliche Steuerung des Entstehungsbereichs der Schmelze, so dass die Schweißstelle bzw. der Aufschmelzbereich von den kritischen, den Schmelzeaustritt fördernden Stellen weg zu weniger kritischen Stellen ermöglicht werden kann.

In einer weiteren besonders bevorzugten Ausführungsform des erfindungsgemäßen Verfahrens werden das Leitungsende und der Anschluss in einem ersten Schritt durch eine im wesentlichen lineare Relativbewegung zusammengefügt, wobei das Leitungsende und der Anschluss bis zu einer vorgegebenen Position oder bis zum Erreichen eines vorgegebenen Widerstands relativ zueinander bewegt werden. In einem zweiten Schritt werden das Leitungsende und der Anschluss durch eine im wesentlichen rotative Relativbewegung unter Druck verschweißt. Durch die gesteuerte, lineare Bewegung des Leitungsendes und des Anschlusses relativ zueinander kann der Entstehungsort der Schmelze beeinflusst werden. Überdies kann auch die Schmelzemenge gesteuert werden, indem das Leitungsende und der Anschluss bis zu einer vorgegebenen bestimmten Position relativ zueinander bewegt werden. Durch gezielte Einstellung dieser vorgegebenen Position kann präzise gesteuert werden, wie viel Schmelze beim Reibschweißen erzeugt werden soll. Auf diese Weise kann noch besser gewährleistet werden, dass keine Schmelze in das Leitungsinnere austritt, da nur die für eine ausreichend feste Schweißverbindung erforderliche Schweißgutmenge erzeugt wird.

Alternativ ist es möglich, das Leitungsende und den Anschluss bis zum Erreichen eines vorgegebenen Widerstands, insbesondere eines vorgegebenen mechanischen Reibwiderstands, relativ zueinander zu bewegen. Die Einstellung dieses vorgegebenen Widerstands gestattet die Regulierung der Schmelzemenge derart, dass die Bildung einer für eine feste Schweißverbindung erforderlichen Menge ermöglicht wird, ohne einen Überschuss an Schmelze zu erzeugen, der möglicherweise in das Leitungsinnere austritt.

Durch die Mehrstufigkeit des Verfahrens, d.h. die Durchführung einer im wesentlichen linearen Relativbewegung in einem ersten Schritt gefolgt von einer im wesentlichen rotativen Relativbewegung in einem zweiten Schritt, wird vermieden, dass das Leitungsende bereits beim Einschieben in den Anschluss aufgeschmolzen wird. Vielmehr wird durch das mehrstufige Verfahren eine gezielte Aufschmelzung des Leitungsendes im hinteren Anschlussbereich gefördert, der einen im Hinblick auf die Vermeidung von Schmelzeaustritt in das Leitungsinnere günstigen Bereich bildet. Überdies bietet die Trennung der Prozessschritte Zusammenfügen und Verschweißen eine größere Flexibilität bei der Durchführung des Verfahrens, da die Parameter der Einzelschritte leichter zu beeinflussen sind, so dass das Verfahren insgesamt besser steuerbar ist.

Vorzugsweise ist die im wesentlichen lineare Relativbewegung zwischen dem Leitungsende und dem Anschluss weggesteuert. Die weggesteuerte Durchführung der linearen Relativbewegung zwischen Leitungsende und Anschluss gestattet eine präzise Einstellung der gewünschten Position des Leitungsendes bezüglich des Anschlusses bzw. umgekehrt, da im Rahmen der Wegsteuerung fertigungsbedingte Toleranzen, insbesondere im Hinblick auf Längenabmaße oder Wandstärken der Bauteile gut kompensiert werden können.

Die Wegsteuerung der im wesentlichen linearen Relativbewegung kann in Abhängigkeit von der Wandstärke und/oder vom Durchmesser des Leitungsendes erfolgen. Dadurch wird die Prozessstabilität verbessert, da durch Berücksichtigung der Wandstärke bzw. des Durchmessers des Leitungsendes die damit einhergehende veränderliche Schmelzemenge kontrolliert werden kann. Insbesondere kann die durch die weggesteuerte, im wesentlichen lineare Relativbewegung bestimmte Wegstrecke mit zunehmender Wandstärke des Leitungsendes verringert werden. Da es sich gezeigt hat, dass mit zunehmender Wandstärke auch die Menge an Schweißgut erhöht wird, kann durch eine entsprechende Verringerung der im Rahmen der linearen Relativbewegung durchfahrene Wegstrecke die Schweißgutmenge auf einer zur sicheren Durchführung des Verfahrens ausreichende und günstige Menge reduziert werden.

In einer weiteren bevorzugten Ausführungsform des erfindungsgemäßen Verfahrens wird ein Durchmesser des Leitungsendes wenigstens im ersten Schritt verändert, insbesondere vergrößert, wodurch im Leitungsende Druckspannungen erzeugt werden, die einen radial wirkenden Anpressdruck hervorrufen. Durch eine entsprechend starke Durchmesseränderung können die im Leitungsende entstehenden Druckspannungen und der daraus resultierende Anpressdruck, der sich wiederum auf die Schweißgutmenge auswirkt, gezielt gesteuert werden.

Die Änderung des Durchmessers des Leitungsendes kann entlang einer kurvenförmigen Bahn erfolgen, die durch das Profil des Anschlusses bestimmt ist. Der kurvenförmige Verlauf der Durchmesseränderung, hervorgerufen durch das entsprechende Anschlussprofil, vermeidet die Entstehung von Spannungsspitzen im Material des Leitungsendes und somit lokal unerwünschte Schmelzebildung insbesondere im Übergangsbereich vom kleineren Durchmesser zum größeren Durchmesser des Anschlusses.

In bestimmten Fällen hat es sich als günstig erwiesen, wenn im ersten Schritt die im wesentlichen lineare Relativbewegung mit einer rotativen Relativbewegung zum Anwärmen des Leitungsendes und des Anschlusses überlagert wird. Durch das gezielte Anwärmen des Leitungsendes kann dessen Aufweitverhalten beeinflusst werden, wodurch die Entstehung unerwünschter Spannungsspitzen im Material des Leitungsendes noch besser vermieden werden kann. Außerdem wird durch die Einstellung einer bestimmten Anwärmtemperatur der radiale Anpressdruck gesteuert, woraus sich eine weitere Einflussmöglichkeit auf die Erzeugung der Schmelzemenge ergibt.

In einer anderen bevorzugten Ausführungsform der Erfindung wird der Durchmesser des Leitungsendes vor dem Verbinden mit dem Anschluss der Verbindungsvorrichtung geändert, insbesondere vergrößert. Durch Aufweiten des Leitungsendes vor dem Zusammenstecken des Leitungsendes mit dem Anschluss kann die Entstehung von Spannungsspitzen im Material des Leitungsendes vermieden werden. Die Änderung des Durchmessers des Leitungsendes vor der Verbindung mit dem Anschluss der Verbindungsvorrichtung kann mit den vorstehend genannten Ausführungsformen kombiniert werden. Beispielsweise ist es möglich, den Durchmesser des Leitungsendes zu ändern und daraufhin das mehrstufige Verfahren zum Verbinden der Leitung mit der Verbindungsvorrichtung durchzuführen.

Weiterhin ist es möglich, beim Ändern des Durchmessers des Leitungsendes unterschiedliche Durchmesser in Längsrichtung des Leitungsendes zu bilden. Die in Längsrichtung des Leitungsendes unterschiedlich gebildeten Durchmesser gestatten eine gezielte Beaufschlagung bestimmter Bereiche des Anschlusses mit einem geeigneten und durch den jeweiligen Durchmesser bestimmten Anpressdruck.

In bestimmten Fällen hat es sich als zweckmäßig erwiesen, dass der Durchmesser des Leitungsendes so vergrößert wird, dass der Durchmesser einer Außenfläche des Leitungsendes etwas größer gebildet wird als der Durchmesser einer mit der Außenfläche des Leitungsendes in Kontakt kommenden Innenfläche des Anschlusses. Dadurch wird ein Verschweißen der Außenfläche des Leitungsendes mit einer Innenfläche des Anschlusses ermöglicht.

Eine weitere Möglichkeit zur Steuerung des Entstehungsbereiches der beim Reibschweißen entstehenden Schmelze kann nach einer weiteren Ausführungsform der Erfindung dadurch erreicht werden, dass Kontaktflächen des Leitungsendes und/oder des Anschlusses mit einem Gleitmittel zumindest bereichsweise versehen werden. Auf diese Weise wird die Reibung zwischen dem Anschluss und dem Leitungsende lokal in den Bereichen gesenkt, in denen die Bildung von Schmelze vermieden werden soll.

Die Erfindung wird im Folgenden anhand von schematischen Zeichnungen beispielsweise und mit weiteren Einzelheiten erläutert.

Dabei zeigen:
- Fig. 1: einen Teilschnitt in Längsrichtung eines Ausführungsbeispiels einer erfindungsgemäßen Vorrichtung, die einen mit einer Ausnehmung versehenen Anschluss aufweist;
- Fig. 2: einen Teilschnitt in Längsrichtung eines weiteren Ausführungsbeispiels der erfindungsgemäßen Vorrichtung, wobei der Anschluss mit einer radialen Öffnung versehen ist;
- Fig. 3: das Ausführungsbeispiel nach Fig. 1, wobei ein Leitungsende in den Anschluss eingeschoben wird, und
- Fig. 4: das Ausführungsbeispiel nach Fig. 1, wobei das Leitungsende in die zum Reibschweißen vorgesehene Position gebracht ist.

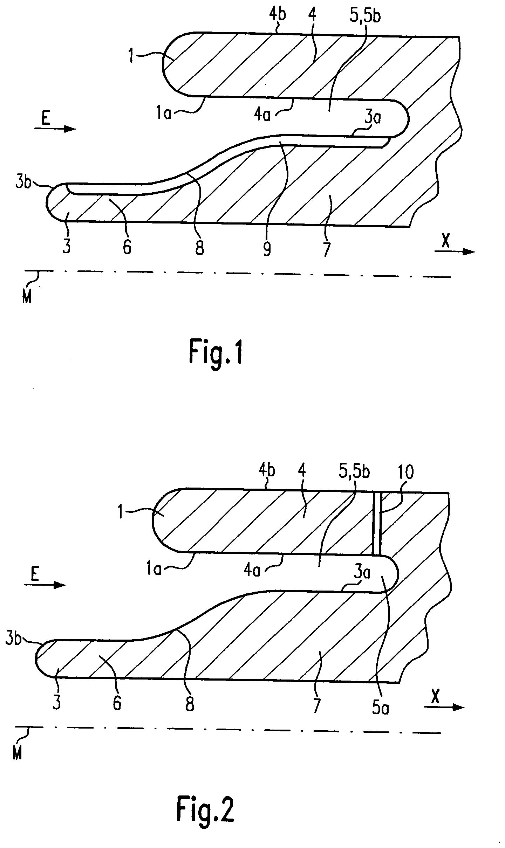

Die in den Figuren 1, 2 dargestellte Verbindungsvorrichtung ist ausschnittsweise gezeigt und zwar im Bereich des Anschlusses 1 der Verbindungsvorrichtung. Die Verbindungsvorrichtung ist rotationssymmetrisch bezüglich der Mittelachse M ausgebildet, wobei der in den Figuren 1, 2 nicht gezeigte, unterhalb der Mittellinie M angeordnete Querschnittsbereich der Verbindungsvorrichtung dem in den Figuren 1, 2 dargestellten Querschnittsbereich entspricht.

Die Verbindungsvorrichtung weist einen weiteren, nicht gezeigten Anschluss auf, der in Längsrichtung X der Verbindungsvorrichtung dem Anschluss 1 koaxial gegenüber angeordnet ist. Der Anschluss 1 weist einen Innenstutzen 3 und einen im wesentlichen konzentrisch zum Innenstutzen 3 angeordneten Außenstutzen 4 auf. Zwischen dem Innenstutzen 3 und dem Außenstutzen 4 ist ein Ringspalt 5 zur Aufnahme eines Leitungsendes 2 einer zu verbindenden Leitung ausgebildet. Der Innenstutzen 3 ist mit einem Einlaufbereich 6 und mit einem Haltebereich 7 ausgebildet, wobei der Durchmesser des Haltebereichs 7 größer ist als der Durchmesser des Einlaufbereichs 6. Der Einlaufbereich 6 ist dem Haltebereich 7 in der Einschieberichtung, bzw. Einsteckrichtung E des Leitungsendes 2 vorgeordnet. Der Einlaufbereich 6 dient einer Führung des Leitungsendes 2 beim Aufstecken des Leitungsendes 2 auf den Anschluss 1. Die durch das Reibschweißen erzeugte Schweißstelle ist im Haltebereich 7 angeordnet, der den Bereich darstellt, der für die sichere Verbindung zwischen dem Anschluss 1 und dem Leitungsende verantwortlich ist.

Zwischen dem Einlaufbereich 6 und dem Haltebereich 7 ist ein Übergangsbereich 8 vorgesehen, der den Durchmesserunterschied zwischen dem Einlaufbereich 6 und dem Haltebereich 7 ausgleicht. Wie in den Figuren 1, 2 dargestellt, ist dieser Übergangsbereich 8 kurvenförmig ausgebildet.

Hinsichtlich der weiteren Ausgestaltung der in den Figuren 1, 2 gezeigten Verbindungsvorrichtung wird auf die deutsche Patentanmeldung der Anmelderin mit dem Aktenzeichen 10 2004 027 831.8 verwiesen.

Diese Verbindungsvorrichtung ist insbesondere zur Verbindung von Kraftstoffleitungen in Kraftfahrzeugen vorgesehen, kann aber auch auf anderen technischen Gebieten zum Einsatz kommen, bei denen es auf eine sichere Verbindung von Leitungen zum Transport von flüssigen oder gasförmigen Medien ankommt.

Das Verbinden des Leitungsendes 2 mit dem Anschluss 1 der Verbindungsvorrichtung, d.h. des Quick-Connectors, erfolgt durch Reibschweißen. Dabei wird unter dem Begriff "Verbinden von Leitungen" sowohl das Verbinden einer Einzelleitung mit dem Anschluss des Quick-Connectors verstanden als auch das Verbinden von wenigstens zwei Leitungen mit Hilfe des Quick-Connectors, der auf einer Anschlussseite mit einem Leitungsende durch Reibschweißen fest verbunden und auf der anderen Anschlussseite mit einem weiteren Leitungsende, beispielsweise mittels eines nicht gezeigten Clips, fixiert wird.

Eine Möglichkeit, das Mittel zur Abfuhr der durch das Reibschweißen erzeugbaren Schmelze aus dem Entstehungsbereich zu verwirklichen, besteht darin, wie in Fig. 1 dargestellt, eine Ausnehmung 9 im Anschluss vorzusehen, die zumindest abschnittsweise im wesentlichen in Längsrichtung X des Anschlusses erstreckt ist. Die längliche Ausnehmung 9 ist beispielsweise als eine Nut oder Riefe ausgebildet, die einen U-förmigen oder V-förmigen Querschnitt aufweist. Andere Querschnittsgeometrien sind ebenfalls möglich.

Die Ausnehmung 9 ist in der Außenfläche 3a des Innenstutzens 3 ausgebildet, und erstreckt sich im wesentlichen über die gesamte Länge des Innenstutzens 3. Die Ausnehmung 9 endet in dem in Fig. 1 gezeigten Beispiel etwas vor der Abschlusskante 3b des Innenstutzens, wodurch eine Barriere als Sicherung geschaffen wird, die verhindert, dass Schmelze an der Abschlusskante 3b ins Leitungsinnere austritt.

Es ist auch möglich, die Ausnehmung 9 bis zur Abschlusskante 3b zu führen, so dass die Ausnehmung 9 über die gesamte Länge des Innenstutzens 3 erstreckt ist. Es hat sich gezeigt, dass die Schmelze in der Ausnehmung 9 nicht bis zur Abschlusskante 3b fließt, sondern mit einem ausreichend großen Abstand vor der Abschlusskante 3b endet. Die Erstreckung der Ausnehmungen 9 über die gesamte Länge des Innenstutzens 3 erleichtert die Herstellung der Vorrichtung durch Spritzgießen oder Extrudieren.

Die Ausnehmung 9 ist dem kurvenförmigen Profil des Innenstutzens 3 angepasst und erstreckt sich entlang der konturierten Oberfläche des Innenstutzens 3.

In dem in Fig. 1 dargestellten Beispiel ist die Ausnehmung 9 bis in den Grund des Ringspaltes 5 erstreckt und ist somit teilweise im Innenraum 5b des Anschlusses 1 angeordnet, der zur Aufnahme des nicht gezeigten Leitungsendes 2 vorgesehen ist. Durch die Erstreckung der Ausnehmung 9 bis in den Grund des Ringspaltes 5 wird sichergestellt, dass die Ausnehmung 9 mit dem Entstehungsbereich der Schmelze, d.h. mit der Schweißzone, in Verbindung steht, und für eine Abfuhr überschüssiger Schmelze sorgen kann.

Die in Fig. 1 dargestellte Ausnehmung 9 ist parallel zur Längsrichtung X des Anschlusses 1 erstreckt. Es ist auch möglich, die Ausnehmung 9 unter einem Winkel zur Längsrichtung X des Anschlusses 1 anzuordnen, so dass eine längere Wegstrecke für den Abfluss der überschüssigen Schmelze aus dem Aufschmelzbereich zur Verfügung steht. Durch eine spiralförmige Ausbildung der Ausnehmung 9 kann diese Strecke noch weiter verlängert werden.

Es ist möglich, nur eine einzige Ausnehmung 9 im Anschluss vorzusehen. Für eine gleichmäßige Abfuhr überschüssiger Schmelze ist es zweckmäßig, zwei, drei oder vier Ausnehmungen 9 vorzusehen, die äquidistant beabstandet auf dem Umfang des Anschlusses angeordnet sind. Eine größere Anzahl von Ausnehmungen 9 ist ebenfalls möglich.

Die Ausnehmung 9 kann auch alternativ oder zusätzlich zu der im Innenstutzen 3 vorgesehenen Ausnehmung 9 in der Innenfläche 4a des Außenstutzens 4 ausgebildet sein.

Die Erfindung ist nicht auf die in Fig. 1 dargestellte Bauform der Verbindungsvorrichtung beschränkt, sondern kann auch bei Verbindungsvorrichtungen, insbesondere Quick-Connectoren, mit anderen Geometrien realisiert werden.

Die Wirkung der wenigstens einen Ausnehmung 9 besteht darin, überschüssige Schmelze aus der Schweißzone kontrolliert, d.h. in einer vorgegebenen Richtung, abzuführen, so dass eine unkontrollierte und undefinierte Schmelzeausbreitung im Anschluss 1 zwischen dem nicht gezeigten Leitungsende 2 und dem Innenstutzen 3 bzw. dem Außenstutzen 4 verhindert wird. Durch die kontrollierte Schmelzeabfuhr und die damit einhergehende Vergrößerung des Fließquerschnittes wird eine Absenkung des Schmelzedruckes erreicht, so dass die in der Ausnehmung 9 fließend überschüssige Schmelze nicht bis an die Abschlusskante 3b und somit nicht in das Leitungsinnere gelangt. Vielmehr endet die abfließende Schmelze mit einem Abstand vor der Abschlusskante 3b und erstarrt in der wenigstens einen Ausnehmung 9. Die dadurch entlang der Ausnehmung 9 entstehende Verbindung zwischen dem Innenstutzen und dem Leitungsende trägt zu einer Erhöhung der Festigkeit der gesamten Verbindung bei.

Es hat sich überraschenderweise gezeigt, dass die Erstreckung der Ausnehmung 9 in Richtung der Abschlusskante 3b des Anschlusses 1 zu der angestrebten Wirkung, nämlich einer Verhinderung des Schmelzeaustritts, insbesondere an der Abschlusskante 3b, führt, obwohl die überschüssige Schmelze in der Ausnehmung 9 in Richtung der Abschlusskante 3b geleitet wird. Dieses liegt insbesondere daran, dass die Länge der Ausnehmung 9 so bemessen ist, dass die überschüssige Schmelze nicht bis an das Ende der Ausnehmung 9 gelangen kann. Die dafür erforderlichen Versuche kann ein Fachmann auf einfache Weise in Abhängigkeit von der Geometrie des jeweiligen Quick-Connectors ermitteln.

Überdies besteht die Möglichkeit, wenigstens eine, nicht gezeigte taschenförmige Ausnehmung, beispielsweise in der Außenfläche 3a des Innenstutzens 3 so auszubilden, dass diese taschenförmige Ausnehmung mit dem Aufschmelzbereich in Verbindung steht. Auf dies Weise wird erreicht, dass beim Reibschweißen erzeugte überschüssige Schmelze in die taschenförmige Ausnehmung gelangt und somit kontrolliert aus dem Entstehungsbereich der Schmelze abgeführt wird. Eine Kombination der taschenförmigen Ausnehmung mit der in Fig. 1 dargestellten länglichen Ausnehmung 9 ist ebenfalls möglich. Beispielsweise könnte die taschenförmige Ausnehmung nahe der Abschlusskante 3b im Innenstutzen 3 ausgebildet und mit der Ausnehmung 9 verbunden sein. Die Ausnehmung 9 würde dann am abschlusskantenseitigen Ende eine taschenförmige in Umfangsrichtung des Anschlusses 1 erstreckte Verbreiterung aufweisen, die als Schmelzereservoir dient und überschüssige Schmelze aufnehmen kann, die bis an das abschlusskantenseitige Ende der Ausnehmung 9 gelangt. Diese taschenförmige Ausnehmung bzw. Verbreiterung stellt damit eine weitere Sicherung gegen den unerwünschten Austritt von Schmelze an der Abschlusskante 3b dar.

Die im wesentlichen in Längsrichtung X des Anschlusses 1 erstreckte Ausnehmung 9 bedeutet, dass die Ausnehmung 9 wenigstens eine Erstreckungskomponente bzw. Richtungskomponente aufweist, die in Längsrichtung X verläuft. Danach ist beispielsweise auch eine schräg zur Längsrichtung X erstreckte Ausnehmung 9 im wesentlichen in Längsrichtung X des Anschlusses erstreckt, da die Ortskurve der schrägen Ausnehmung 9, bezogen auf die Längsrichtung X, eine in Längsrichtung X verlaufende Komponente und eine in Umfangsrichtung des Anschlusses verlaufende Komponente aufweist. Dasselbe gilt für eine spiralförmig ausgebildete Ausnehmung 9, die ebenfalls eine in Längsrichtung X verlaufende Richtungskomponente aufweist.

Nach dem in Fig. 2 dargestellten Ausführungsbeispiel weist der Anschluss 1 wenigstens eine radiale Öffnung 10 auf, die den Innenraum 5b mit einer Außenfläche 4b des Anschlusses 1 verbindet. Der Innenraum 5b entspricht bei dem in Fig. 2 dargestellten Ausführungsbeispiel dem Ringspalt 5 zwischen dem Innenstutzen 3 und dem Außenstutzen 4. Die in Fig. 2 dargestellte radiale Öffnung 10 kann schräg angeordnet sein, so dass wenigstens eine Richtungskomponente der Öffnung radial verläuft.

Die radiale Öffnung 10 verbindet einen in Einsteckrichtung E hinteren Bereich 5a des Innenraumes 5 des Anschlusses 1 mit der Außenfläche 4b und somit mit der Umgebung. Es ist auch möglich, die radiale Öffnung 10 an anderer Stelle des Anschlusses 1, beispielsweise in etwa in der Mitte des Außenstutzens 4 oder in etwa auf Höhe des Übergangs 8 zwischen dem Einschubbereich 6 und dem Haltebereich 7 anzuordnen. Ferner können auch mehrere in Längsrichtung X des Anschlusses 1 angeordnete radiale Öffnungen 10 ausgebildet sein.

Der in Fig. 2 dargestellte Anschluss 1 kann eine, zwei, drei oder vier oder mehrere radiale Öffnungen 10 aufweisen, die äquidistant beabstandet auf dem Umfang des Anschlusses angeordnet sind. Außerdem ist es möglich, mehrere umfangsweise angeordnete radiale Öffnungen 10 in Längsrichtung X des Anschlusses 1 auszubilden, so dass der Au-βenstutzen 4 mehrere Öffnungsreihen aufweist, die beispielsweise parallel angeordnet sind. Die radialen Öffnungen 10 können Bohrungen mit kreisförmigem Querschnitt sein. Andere Öffnungsgeometrien sind ebenfalls möglich.

Die radiale Öffnung 10 bewirkt eine Entlüftung des Innenraumes 5b des Anschlusses 1 beim Reibschweißen, wobei durch die Bildung von Schmelze komprimierte Luft im Innenraum 5b nach außen an die Umgebung entweichen kann. Dadurch wird vermieden, dass diese komprimierte Luft die im Aufschmelzbereich gebildete Schmelze in Richtung der Abschlusskante 3b presst.

Überdies steigt überschüssige Schmelze in der radialen Öffnung 10 nach oben und wird dadurch aus dem Aufschmelzbereich wirksam abgeführt. Durch eine geeignete Wahl der Anzahl der radialen Öffnungen 10 kann die Abfuhrmenge der überschüssigen Schmelze reguliert werden. Die äquidistante Beabstandung mehrerer radialen Öffnungen 10 verteilt über dem Umfang des Anschlusses 1 bewirkt eine gleichmäßige Druckentlastung des Innenraumes 5b.

Die überschüssige Schmelze, die durch die radialen Öffnungen 10 an die Außenfläche 4b des Außenstutzens 4 gelangt, ist optisch sichtbar und bietet die Möglichkeit einer Sichtprüfung der Schweißverbindung.

Die in den Fig. 1 und 2 dargestellten Ausführungsbeispiele sowie die vorstehend erläuterten Variationen der Ausführungsbeispiele können miteinander kombiniert werden.

Außerdem ist es möglich, die in Fig. 1 dargestellte Ausnehmung 9 nicht im Quick-Connector, sondern in einer Innenfläche und/oder Außenfläche des zu verbindenden Leitungsendes auszubilden. Auch eine Kombination einer derart konturierten Leitung mit den in Fig. 1, 2 dargestellten Anschlüssen 1 ist möglich. Damit wird eine Anordnung zum Verbinden von Leitungen geschaffen, die einen Quick-Connector bzw. eine Verbindungsvorrichtung für Leitungen sowie eine Leitung mit einem Leitungsende umfasst, die einen Austritt von Schmelze an der Abschlusskante 3b des Innenstutzens 3 wirksam verhindert.

Im Rahmen des Verfahrens zum Verbinden von Leitungen wird die beim Reibschweißen gebildete Schmelze aus deren Entstehungsbereich gesteuert, d.h. gezielt abgeführt, wobei insbesondere die Schmelze beim Abführen kanalisiert wird. Dies kann beispielsweise dadurch erfolgen, dass die überschüssige Schmelze durch die in Fig. 1 dargestellte wenigstens eine Ausnehmung 9 im Anschluss 1 im wesentlichen in Längsrichtung des Anschlusses 1 geleitet wird. Eine weitere Möglichkeit, die Schmelze aus dem Aufschmelzbereich gesteuert abzuführen, kann dadurch erfolgen, dass der Anschluss 1 beim Reibschweißen zum Druckabbau belüftet wird, was mittels des in Fig. 2 dargestellten Anschlusses 1 und die darin ausgebildete radiale Öffnung 10 erfolgen kann.

Die durch die kontrollierte Abfuhr der beim Reibschweißen gebildeten überschüssigen Schmelze aus der Schweißzone erzielbare Wirkung kann dadurch gesteigert werden, dass die Bildung des Entstehungsbereiches der Schmelze gesteuert, insbesondere lokal verlagert wird. Dadurch ist es möglich, den Entstehungsbereich der Schmelze an eine im Hinblick auf die Vermeidung von Schmelzeaustritt in das Leitungsinnere unkritische Stelle des Anschlusses 1 zu verlegen und gleichzeitig die beim Reibschweißen entstehende überschüssige Schmelze kontrolliert abzuführen, so dass insgesamt das Risiko gesenkt werden kann, dass Schmelze in das Leitungsinnere gelangt.

Durch das Steuern des Entstehungsbereiches der beim Reibschweißen entstehenden Schmelze wird die lokale Position des Ortes der Schmelzebildung gezielt verändert. Das bedeutet, dass der Ort der Schmelzebildung beispielsweise in Einschiebrichtung E nach hinten in einen hinteren Abschnitt des Haltebereichs 7 verlagert wird. Der Begriff "Steuern" bedeutet dabei sowohl das Steuern des Verfahrens durch einen offenen Signalkreis als auch das Regeln des Verfahrens im Rahmen eines geschlossenen Signalkreises, bei dem die gesteuerte Ausgangsgröße auf die zu steuernde Eingangsgröße zurückwirkt.

Ferner kann das Steuern des Entstehungsbereiches der beim Reibschweißen entstehenden Schmelze eine Veränderung der Bereichsgrenzen in dem Sinne bedeuten, dass der Entstehungsbereich der Schmelze flächenmäßig verändert, insbesondere begrenzt wird. Insofern kann durch das Steuern des Entstehungsbereiches der Schmelze ein im Vergleich zu einem nicht gesteuertes Verfahren flächenmäßig kleinerer Bereich eingestellt werden.

Durch die gesteuerte Veränderung der lokalen Position des Entstehungsortes der Schmelze als auch durch die flächenmäßige Begrenzung des Entstehungsbereiches kann vermieden werden, dass Schmelze zwischen der Innenseite des Leitungsendes 2 und der Außenfläche des Innenstutzens ins Leitungsinnere gelangt und dort in der Form von Granulat bzw. Abriebspartikeln zu einer Verschmutzung der Leitung führt. Insbesondere ist es durch Steuern des Entstehungsbereiches möglich, die beim Reibschweißen entstehende Schmelze entweder an eine im Hinblick auf den unerwünschten Schmelzeaustritt unkritische Stelle des Anschlusses 1 zu verlegen oder den Schmelze-Entstehungsbereich flächenmäßig so zu begrenzen, dass nur die zur Bildung einer ausreichend festen Schweißverbindung erforderliche Schweißgutmenge erzeugt wird.

Das Steuern des Entstehungsbereiches der Schmelze kann beispielsweise dadurch erfolgen, dass der Anpressdruck zwischen dem Leitungsende 2 und dem Anschluss 1 im wesentlichen lokal im Entstehungsbereich der Schmelze erzeugt wird. Durch gezielte Beaufschlagung bestimmter Anschlussbereiche 1 mit dem Anpressdruck wird erreicht, dass hauptsächlich in diesen Bereichen ein Verschweißen stattfindet.

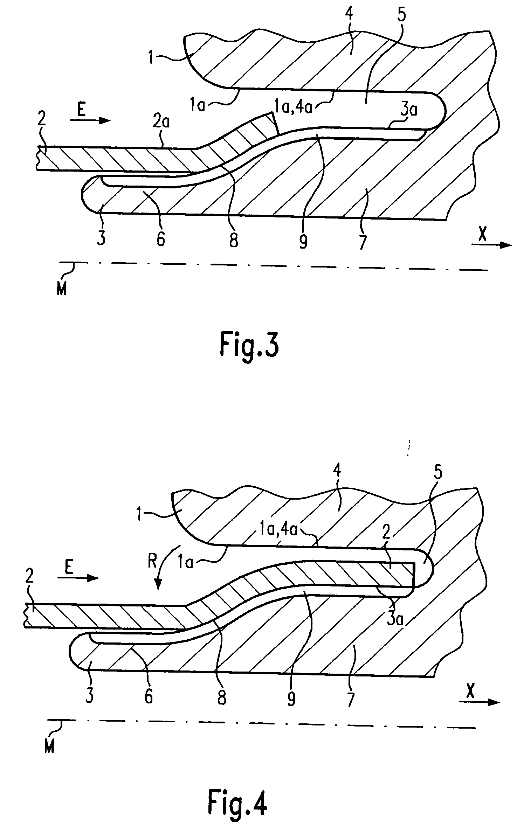

Eine konkrete Möglichkeit, den Entstehungsbereich der beim Reibschweißen entstehenden Schmelze zu steuern, bietet die in den Figuren 3, 4 exemplarisch dargestellte Abfolge der Verbindungsschritte nach einem bevorzugten Ausführungsbeispiel der Erfindung.

In Fig. 3 ist dargestellt, dass in einem ersten Schritt das Leitungsende 2 und der Anschluss 1 durch eine im wesentlichen lineare Relativbewegung zusammengefügt werden. Die Fügerichtung ist mit dem Pfeil E bezeichnet, wobei die Erfindung nicht auf die dargestellte Einschubbewegung des Leitungsendes 2 begrenzt ist. Vielmehr ist es auch möglich, das Leitungsende 2 ortsfest zu halten und den Anschluss 4 entgegen der in Fig. 1 gezeigten Einschubrichtung E zu bewegen, so dass eine im wesentlichen lineare Relativbewegung zwischen den beiden Bauteilen stattfindet.

Im Rahmen des in Fig. 3 gezeigten ersten Schrittes werden das Leitungsende 2 und der Anschluss 1 bis zu einer vorgegebenen Position oder bis zum Erreichen eines vorgegebenen Widerstandes relativ zueinander bewegt, wodurch der Entstehungsbereich der im nachfolgenden zweiten Schritt durch Reibschweißen gebildeten Schmelze gesteuert wird.

Generell erfolgt die Steuerung des Entstehungsbereichs der Schmelze durch ein definiertes, gesteuertes Einschieben des Leitungsendes 2 in den Anschluss 1, wobei eine vorgegebene Wegstrecke zurückgelegt wird. Zur Bestimmung dieser vorgegebenen Wegstrecke können verschiedene Steuergrößen verwendet werden. Beispielsweise ist es möglich, den zurückgelegten Weg oder die Position des Leitungsendes bezüglich des Anschlusses bzw. umgekehrt zu messen. Außerdem ist es möglich, die gewünschte Wegstrecke durch Messung des mechanischen Reibwiderstands zwischen dem Leitungsende 2 und dem Anschluss 1 zu bestimmen, da dieser Widerstand mit zunehmender Wegstrecke zunimmt. Es ist ferner möglich, das Verfahren über die Zeit zu steuern.

Nachdem das Leitungsende 2 und der Anschluss 1 durch die lineare Relativbewegung ineinander gesteckt und dadurch mechanisch vorläufig fixiert sind, wird im zweiten Verfahrensschritt, der in Fig. 2 dargestellt, durch eine rotative Relativbewegung zwischen dem Leitungsende 2 und dem Anschluss 1 Reibungswärme zwischen den beiden Bauteilen erzeugt, die dadurch verschweißen.

Um zu vermeiden, dass das Leitungsende bereits im ersten Schritt beim Einschieben in den Anschluss 1 aufschmilzt, wird die lineare Relativbewegung im Rahmen des ersten Verfahrensschrittes so langsam und mit so geringem Druck ausgeführt, dass es nicht zum Aufschmelzen des Leitungsendes 2 kommt. Erst im zweiten Schritt bei der Durchführung der rotativen Relativbewegung zwischen dem Leitungsende 2 und dem Anschluss 1 werden die Geschwindigkeit, d.h. die Drehgeschwindigkeit, und der Druck gezielt so erhöht, dass das Verschweißen des Leitungsendes 2 und des Anschlusses 1 nur während der zweiten Phase des Verfahrens, d.h. während des zweiten Schrittes (Fig. 2) erfolgt. Durch die Trennung der beiden Prozessschritte, Einschieben und Verschweißen, wird zum einen erreicht, dass die Schmelze ausschließlich in dem dafür vorgesehenen Bereich, nämlich im Haltebereich 7, entsteht und nicht bereits im vorderen Einlaufbereich 6. Diese Verfahrensführung trägt dazu bei, dass keine Schmelze zwischen dem Innenstutzen 3 und dem Leitungsende 2 austritt und in das Leitungsende gelangen kann.

Die verschiedenen Möglichkeiten zur Bestimmung der Einschubtiefe, d.h. der Wegstrecke, die durch die lineare Relativbewegung zwischen dem Leitungsende 2 und dem Anschluss 1 bestimmt wird, werden im Folgenden näher erläutert.

Für die Bestimmung der jeweiligen Einschubtiefe, d.h. Wegstrecke, müssen die speziellen Geometrien des jeweils im Rahmen des Verfahrens verwendeten Quick-Connectors bzw. des Leitungsendes 2 berücksichtigt werden. Generell gilt, dass die maximale Einschubtiefe durch die für eine ausreichend feste Schweißverbindung erforderliche Schweißgutmenge begrenzt wird. Wird das Leitungsende zu tief eingeschoben, wird zuviel Schmelze erzeugt, die in das Leitungsinnere austritt und zu den unerwünschten Verschmutzungen führt. In den meisten Anwendungsfällen sollte vermieden werden, dass das Leitungsende bis zum Anschlag, d.h. bis an den Grund des Ringspalts 5, eingeschoben wird, da in diesem Fall die gebildete Schmelzemenge zu groß ist.

Die minimale Einschubtiefe bestimmt wesentlich die Festigkeit der Schweißverbindung, da mit geringerer Einschubtiefe die gebildete Schmelzemenge abnimmt und somit für die Herstellung der Schweißverbindung weniger Schweißgut zur Verfügung steht.

Die minimale und maximale Einschubtiefe sind geometrieabhängig und können durch Versuche für den jeweiligen Quick-Connector bzw. die jeweilige Kombination aus Quick-Connector mit Leitungsende bestimmt werden. Die Einschubtiefe, d.h. die durch die lineare Relativbewegung bestimmte Wegstrecke hängt beispielsweise von der Wandstärke des zu verbindenden Rohres bzw. der zu verbindenden Leitung ab. Bei der Festlegung der minimalen und maximalen Einschubtiefe wird deshalb berücksichtigt, ob die zu verbindende Leitung eine große oder eine geringe Wandstärke aufweist.

Im Fall einer dickwandigen Leitung, beispielsweise mit einer Wandstärke von ca. 1,1 mm, entsteht bereits im vorderen Abschnitt des Haltebereichs 7 ein für das Reibschweißen ausreichend hoher Anpressdruck, so dass ein prozessstabiler Schweißbereich, der eine ausreichende Festigkeit bei gleichzeitiger Vermeidung von Schmelzeaustritt gewährleistet, durch eine geringere Einschubtiefe erreicht wird als bei einer dünnwandigeren Leitung mit beispielsweise einer Wandstärke von 0,9 mm.

Bei einer solchen dünnwandigen Leitung mit einer Wandstärke von ca. 0,9 mm muss eine größere Einschubtiefe gewählt werden, um eine ausreichende Festigkeit der Schweißverbindung zu erzielen. Da bei dünnwandigeren Leitungen weniger Schmelze gebildet wird, vergrößert sich auch die maximale Einschubtiefe, so dass insgesamt ein tieferes Einschieben des Leitungsendes bei dünnwandigeren Rohren in den Anschluss 1 möglich ist, ohne dass es zu einem Schmelzeaustritt in das Leitungsinnere kommt.

Sowohl bei dickwandigen als auch bei dünnwandigen Leitungen muss jeweils der optimale Bereich für die Einschubtiefe in Abhängigkeit der jeweiligen Geometrie des Quick-Connectors (beispielsweise Durchmesser des Haltebereichs 7 oder Steigung des Übergangsbereiches 8) ermittelt werden, der eine prozessstabile Verschweißung der Bauteile im Hinblick auf eine Vermeidung der Verschmutzung des Leitungsinneren und die Festigkeit der Verbindung gewährleistet.

Eine weitere Möglichkeit zur Bestimmung der Einschubtiefe, d.h. der Wegstrecke bietet die Messung des mechanischen Reibwiderstandes zwischen Leitungsende 2 und Anschluss 1. Andere Möglichkeiten der Bestimmung dieser Wegstrecke sind denkbar. Beispielsweise könnte die Einschubzeit bestimmt werden. Die Wegsteuerung hat allerdings den Vorteil, dass fertigungsbedingte Toleranzen, insbesondere der Längenabmaße der Leitung bzw. des Quick-Connectors berücksichtigt werden können, wodurch eine präzise Steuerung des Entstehungsbereiches der Schmelze ermöglicht wird.

Bei der Bestimmung der Einschubtiefe bzw. des prozessstabilen Bereiches der Einschubtiefe können auch Werkstoffkennwerte der jeweils verwendeten Materialien berücksichtigt werden. Beispielsweise kann die Materialdichte, die Temperaturleitfähigkeit, die Wärmeleitfähigkeit, die Wärmeübergangszahl, die spezifische Wärmekapazität, die Wärmeeindringfähigkeit und der Längenausdehnungskoeffizient herangezogen werden.

Eine weitere zusätzliche Möglichkeit, den Schmelze-Entstehungsbereich zu steuern, besteht darin, den Durchmesser des Leitungsendes im ersten Verfahrensschritt, d.h. beim Aufschieben des Leitungsendes 2 auf den Anschluss 4, zu verändern, insbesondere zu vergrößern. Die Änderung des Durchmessers des Leitungsendes 2 erfolgt dabei entlang einer kurvenförmigen Bahn, die durch das Profil des Anschlusses 2 bestimmt ist, wie in den Figuren 3, 4 dargestellt. Durch die Verformung des Leitungsendes entlang einer kurvenförmigen Bahn werden Spannungsspitzen im Material des Leitungsendes und somit lokal unerwünschte Schmelzebildung im Übergangsbereich 8 bzw. in dem vorderen Abschnitt des Haltebereichs 7 vermieden, der an den Übergangsbereich 8 angrenzt.

Insbesondere zusammen mit dem langsamen Einschieben des Leitungsendes 2 in den Anschluss 1 wird durch die Änderung des Durchmessers des Leitungsendes entlang der kurvenförmigen Bahn erreicht, dass gerade bei dickwandigeren Leitungen die Bildung von Schmelze im vorderen Abschnitt des Haltebereichs 7 bzw. im Übergangsbereich 8 verhindert wird, so dass die Schmelze hauptsächlich im hinteren Abschnitt des Haltebereichs 7 entsteht, der im Hinblick auf den unerwünschten Schmelzeaustritt vergleichsweise unkritisch ist.

Die im ersten Schritt erfolgende lineare Relativbewegung kann mit einer rotativen Relativbewegung überlagert werden, wodurch das Leitungsende bzw. der Anschluss angewärmt werden. Auf diese Weise wird erreicht, dass beim Reibschweißen vergleichsweise mehr Schweißgut erzeugt wird, so dass die Festigkeit der Schweißverbindung erhöht werden kann. Außerdem wird durch das Anwärmen das Aufweitverhalten des Leitungsendes 2 und die im Material erzeugbaren Druckspannungen beeinflusst, wodurch eine Steuerung des Anpressdruckes ermöglicht wird.

Eine weitere Möglichkeit, den Entstehungsbereich der beim Reibschweißen gebildeten Schmelze zu steuern, besteht darin, den Durchmesser des Leitungsendes 2 vor dem Verbinden mit dem Anschluss 1 der Verbindungsvorrichtung, d.h. vor Durchführung des ersten Schrittes, zu ändern, insbesondere zu vergrößern. Zum einen lässt sich dadurch der Effekt verstärken, Spannungsspitzen im Material zu vermeiden, wodurch die Entstehung von Schmelze an unerwünschten Stellen, insbesondere in der Nähe des Einlaufbereiches 6, vermieden werden kann.

Außerdem kann durch geeignetes Aufweiten des Leitungsendes 2 durch einen in den Figuren 3, 4 nicht gezeigten Dorn der Durchmesser des Leitungsendes 2 so vergrößert werden, dass der Durchmesser einer Außenfläche 2a des Leitungsendes 2 etwas größer gebildet wird als der Durchmesser einer mit der Außenfläche 2a des Leitungsendes 2 in Kontakt kommenden Innenfläche 1a des Anschlusses 1. Das bedeutet, dass durch entsprechendes Aufweiten des Leitungsendes 2 die Innenfläche 4a des Außenstutzens 4 durch das aufgeweitete Leitungsende 2 mit einem Anpressdruck beaufschlagt wird, so dass zwischen der Außenfläche 2a des Leitungsendes 2 und der Innenfläche 4a des Außenstutzens 4 durch eine rotative Relativbewegung eine Schweißverbindung hergestellt werden kann.

Im Unterschied zu dem in Fig. 4 gezeigten Ausführungsbeispiel liegt also das Leitungsende 2 nicht am Innenstutzen 3, sondern am Außenstutzen 4 an. Die beim Reibschweißen gebildete Schmelze entsteht im Fügebereich zwischen der Außenfläche 2a des Leitungsendes 2 und der Innenfläche 4a des Außenstutzens 4. Dadurch wird erreicht, dass eventuell gebildeter Schmelzeüberschuss zwischen dem Leitungsende 2 und dem Außenstutzen 4 ins Freie austritt und nicht in das Leitungsinnere gelangt. Dieses Ausführungsbeispiel des erfindungsgemäßen Verfahrens bietet eine verbesserte Prozesssicherheit.

Weiterhin ist es möglich, dem Leitungsende 2 beim Aufweiten eine bestimmte Form aufzuprägen, wodurch im Material des Leitungsendes 2 unterschiedliche Druckspannungen hervorgerufen werden, die in einem günstigen Anpressverhalten des Leitungsendes 2 resultieren.

Beispielsweise könnte das Leitungsende 2 so verformt werden, dass der Durchmesser im Ausgangsbereich des Leitungsendes 2 (hinteres Ende der Leitung in Einschubrichtung E) etwas kleiner ausgebildet wird, als der Durchmesser in einem in Einschubrichtung E vorderen Bereich des Leitungsendes 2. Das Leitungsende 2 weist damit eine leicht konische Form auf, die sich in Einschubrichtung E verjüngt. Durch die konische Form des Leitungsendes 2 wird erreicht, dass der Anpressdruck des Leitungsendes 2 auf den Haltebereich 7 in Einschubrichtung E zunimmt und an der Stelle des kleinsten Durchmessers des konisch geformten Leitungsendes 2, also im hinteren Abschnitt des Haltebereiches 7 seinen maximalen Wert annimmt. Somit wird im hinteren Abschnitt des Haltebereiches 7 die Schmelzebildung beim Reibschweißen gefördert.

Der Verfahrensschritt, das Leitungsende 2 vor dem Einschieben in den Anschluss 4 aufzuweiten, kann mit den vorstehend erläuterten Ausführungsbeispielen kombiniert werden.

Überdies kann der Entstehungsbereich der Schmelze dadurch gesteuert werden, dass die Außenfläche 3a des Innenstutzens 3 oder die Innenfläche 4a des Außenstutzens 4 mit einem Gleitmittel versehen werden. Dieses Ausführungsbeispiel ist besonders geeignet für eine Kombination aus Leitungsende 2 und Anschluss 4, bei der das Leitungsende 2 beidseitig am Innenstutzen 3 und am Außenstutzen 4 anliegt. Durch die Auftragung eines Gleitmittels auf eine der beiden Kontaktflächen des Innenstutzens 3 und des Außenstutzens 4 wird erreicht, dass jeweils eine, vorteilhafterweise die Innenfläche 4a des Außenstutzens 4 durch die Reibkräfte erwärmt wird, so dass es nur an dieser, nicht mit dem Gleitmittel versehenen Fläche zum Verschweißen kommt.

Außerdem ist es möglich, kritische Abschnitte des jeweiligen Kontaktbereichs zwischen dem Leitungsende 2 und dem Anschluss 4, beispielsweise den Übergangsbereich 8 und den an den Übergangsbereich 8 angrenzenden vorderen Abschnitt des Haltebereichs 7 mit dem Gleitmittel zu versehen. Auch auf diese Weise wird verhindert, dass Schmelze in kritischen Bereichen gebildet wird, so dass die Bildung der Schmelze auf hinsichtlich des Schmelzeaustritts unbedenkliche Abschnitte begrenzt wird.

Eine Kombination der vorstehend erläuterten Ausführungsbeispiele ist möglich. Beispielsweise kann vor dem ersten Schritt des mehrstufigen Verfahrens das Leitungsende aufgeweitet werden, wobei der Übergangsbereich 8 und der an den Übergangsbereich 8 angrenzende vordere Abschnitt des Haltebereichs 7 mit dem Gleitmittel versehen sind.

Wie in Fig. 3, 4 dargestellt, wird im Rahmen des Verfahrens ein mit einem Mittel zur Abfuhr überschüssiger Schmelze versehener Anschluss 1 verwendet. Dieser Anschluss 1 entspricht dem in Fig. 1 gezeigten Anschluss 1. Die Verwendung der anderen offenbarten Anschlüsse bzw. Quick-Connectoren ist ebenfalls möglich.

Die Erfindung eignet sich, ohne darauf beschränkt zu sein, insbesondere zum Verbinden von Kraftstoffleitungen, da mit Hilfe der Erfindung die Erzeugung von Schweißperlen, die in das Leitungsinnere gelangen, wirksam vermieden oder zumindest verringert werden kann.

## Patentansprüche

1. Vorrichtung zum Verbinden von Leitungen mit einem Anschluss (1), der zur Verbindung mit einem Leitungsende (2) durch Reibschweißen angepasst ist, wobei die Vorrichtung rotationssymmetrisch bezüglich Ihrer Mittelachse (M) ausgebildet ist, wobei der Anschluss (1) einen Innenraum (5) zur Aufnahme des Leitungsendes (2) aufweist, der einem Ringspalt (5) zwischen einem Innenstutzen (3) und einem im Wesentlichen konzentrisch zum Innenstutzen (3) angeordneten Außenstutzen (4) entspricht,
wobei der Innenstutzen (3) mit einem Einlaufbereich (6) zur Führung des Leitungsendes (2) beim Aufstecken des Leitungsendes (2) auf den Anschluss (1) und mit einem Haltebereich (7) zur sicheren Verbindung zwischen dem Anschluss (1) und dem Leitungsende (2) ausgebildet ist, wobei die durch das Reibschweißen erzeugte Schweißstelle im Haltebereich (7) angeordnet ist, wobei der Durchmesser des Haltebereichs (7) größer ist als der Durchmesser des Einlaufbereichs (6), wobei der Einlaufbereich (6) dem Haltebereich (7) in einer Einsteckrichtung (E) des Leitungsendes (2) vorgeordnet ist, **dadurch gekennzeichnet, dass** zwischen dem Einlaufbereich (6) und dem Haltebereich (7) ein kurvenförmiger Übergangsbereich (8) vorgesehen ist, der den Durchmesserunterschied zwischen dem Einlaufbereich (6) und dem Haltebereich (7) ausgleicht, wobei der Anschluss (1) wenigstens eine radiale Öffnung (10) zur Abfuhr der durch das Reibschweißen erzeugbaren Schmelze aus deren Entstehungsbereich aufweist, die einen in der Einsteckrichtung (E) hinteren Bereich (5a) des Innenraums (5) des Anschlusses (1) mit einer Außenfläche (4b) des Anschlusses (1) verbindet.

2. Vorrichtung nach Anspruch 1, **dadurch gekennzeichnet, dass** der Anschluss (1) wenigstens eine Ausnehmung (9) umfasst, die zumindest abschnittsweise im Wesentlichen in Längsrichtung X des Anschlusses (1) erstreckt ist.

3. Vorrichtung nach Anspruch 2, **dadurch gekennzeichnet, dass** die Ausnehmung (9) parallel zur Längsrichtung X des Anschlusses (1) erstreckt ist.

4. Vorrichtung nach Anspruch 2, **dadurch gekennzeichnet, dass** die Ausnehmung (9) unter einem Winkel zur Längsrichtung X des Anschlusses (1) erstreckt ist.

5. Vorrichtung nach Anspruch 2, **dadurch gekennzeichnet, dass** die Ausnehmung (9) spiralförmig ausgebildet ist.

6. Vorrichtung nach wenigstens einem der Ansprüche 2 bis 5, **dadurch gekennzeichnet, dass** zwei, drei oder vier Ausnehmungen (9) äquidistant beabstandet auf dem Umfang des Anschlusses (1) angeordnet sind.

7. Vorrichtung nach wenigstens einem der Ansprüche 2 bis 6, **dadurch gekennzeichnet, dass** der Anschluss (1) einen Innenstutzen (3) umfasst, in dessen Außenfläche (3a) wenigstens eine Ausnehmung (9) vorgesehen ist.

8. Vorrichtung nach wenigstens einem der Ansprüche 2 bis 6, **dadurch gekennzeichnet, dass** der Anschluss (1) einen Außenstutzen (4) umfasst, in dessen Innenfläche (4a) die wenigstens eine Ausnehmung (9) vorgesehen ist.

9. Vorrichtung nach wenigstens einem der Ansprüche 1 bis 8, **dadurch gekennzeichnet, dass** der Anschluss (1) wenigstens eine taschenförmige Ausnehmung aufweist, die mit dem Entstehungsbereich zur Aufnahme von Schmelze verbunden ist.

10. Vorrichtung nach wenigstens einem der Ansprüche 1 bis 9, **dadurch gekennzeichnet, dass** mehrere, insbesondere zwei, drei oder vier radiale Öffnungen (10) äquidistant beabstandet auf dem Umfang des Anschlusses (1) angeordnet sind.

11. Vorrichtung nach wenigstens einem der Ansprüche 1 bis 10, **dadurch gekennzeichnet, dass** der Anschluss (1) Mittel zur Steuerung des Entstehungsbereiches der durch das Reibschweißen erzeugbaren Schmelze aufweist.

12. Vorrichtung nach wenigstens einem der Ansprüche 1 bis 11, **dadurch gekennzeichnet, dass** die Außenfläche (3a) des Innenstutzens (3) zumindest bereichsweise mit einem Gleitmittel versehen ist.

13. Vorrichtung nach wenigstens einem der Ansprüche 1 bis 12, **dadurch gekennzeichnet, dass** die Innenfläche (4a) des Außenstutzens (4) zumindest bereichsweise mit einem Gleitmittel versehen ist.

14. Kraftfahrzeug mit einer Vorrichtung nach wenigstens einem der Ansprüche 1 bis 13.

15. Verfahren zum Verbinden von Leitungen mit den Schritten:
- Verbinden eines Leitungsendes (2) mit einem Anschluss (1) einer Verbindungsvorrichtung für Leitungen durch Reibschweißen, wobei die Verbindungsvorrichtung rotationssymmetrisch bezüglich Ihrer Mittelachse (M) ausgebildet ist;
**gekennzeichnet durch**
- Aufnehmen des Leitungsendes (2) in einen Innenraum (5) des Anschlusses (1), der einem Ringspalt (5) zwischen einem Innenstutzen (3) und einem im Wesentlichen konzentrisch zum Innenstutzen (3) angeordneten Außenstutzen (4) entspricht,
wobei der Innenstutzen (3) mit einem Einlaufbereich (6) zur Führung des Leitungsendes (2) beim Aufstecken des Leitungsendes (2) auf den Anschluss (1) und mit einem Haltebereich (7) zur sicheren Verbindung zwischen dem Anschluss (1) und dem Leitungsende (2) ausgebildet ist, wobei die durch das Reibschweißen erzeugte Schweißstelle im Haltebereich (7) angeordnet ist, wobei der Durchmesser des Haltebereichs (7) größer ist als der Durchmesser des Einlaufbereichs (6), wobei der Einlaufbereich (6) dem Haltebereich (7) in einer Einsteckrichtung (E) des Leitungsendes (2) vorgeordnet ist,
wobei zwischen dem Einlaufbereich (6) und dem Haltebereich (7) ein kurvenförmiger Übergangsbereich (8) vorgesehen ist, der den Durchmesserunterschied zwischen dem Einlaufbereich (6) und dem Haltebereich (7) ausgleicht;
- gesteuertes Abführen der beim Reibschweißen gebildeten Schmelze aus deren Entstehungsbereich durch wenigstens eine radiale Öffnung (10) die einen in der Einsteckrichtung (E) hinteren Bereich (5a) des Innenraums (5) des Anschlusses (1) mit einer Außenfläche (4b) des Anschlusses (1) verbindet.

16. Verfahren nach Anspruch 15, **dadurch gekennzeichnet, dass** die Schmelze beim Abführen durch wenigstens eine Ausnehmung (9) im Anschluss (1) im Wesentlichen in Längsrichtung des Anschlusses (1) kanalisiert wird.

17. Verfahren nach Anspruch 15 oder 16, **dadurch gekennzeichnet, dass** der Anschluss (1) beim Reibschweißen zum Druckabbau belüftet wird.

18. Verfahren nach wenigstens einem der vorangehenden Ansprüche 15 bis 17, **gekennzeichnet durch** den Schritt - Steuern des Entstehungsbereiches der beim Reibschweißen gebildeten Schmelze.

19. Verfahren nach einem der Ansprüche 15 bis 18, **dadurch gekennzeichnet, dass** ein Anpressdruck zwischen dem Leitungsende (2) und dem Anschluss (1) im Wesentlichen lokal im Entstehungsbereich der Schmelze erzeugt wird.

20. Verfahren nach einem der Ansprüche 15 bis 19, **dadurch gekennzeichnet, dass** das Leitungsende (2) und der Anschluss (1) in einem ersten Schritt durch eine im wesentlichen lineare Relativbewegung zusammengefügt werden, wobei das Leitungsende (2) und der Anschluss (1) bis zu einer vorgegebenen Position oder bis zum Erreichen eines vorgegebenen Widerstandes relativ zueinander bewegt werden und - in einem zweiten Schritt durch eine im wesentlichen rotative Relativbewegung unter Druck verschweißt werden.

21. Verfahren nach Anspruch 20, **dadurch gekennzeichnet, dass** die im wesentlichen lineare Relativbewegung weggesteuert wird.

22. Verfahren nach Anspruch 21, **dadurch gekennzeichnet, dass** die Wegsteuerung der im Wesentlichen linearen Relativbewegung in Abhängigkeit von der Wandstärke und/oder dem Durchmesser des Leitungsendes (2) erfolgt.

23. Verfahren nach Anspruch 22, **dadurch gekennzeichnet, dass** die Wegstrecke, die durch die weggesteuerte, im wesentlichen lineare Relativbewegung bestimmt wird, mit zunehmender Wandstärke des Leitungsendes (2) verringert wird.

24. Verfahren nach wenigstens einem der Ansprüche 20 bis 23, **dadurch gekennzeichnet, dass** im ersten Schritt ein Durchmesser des Leitungsendes (2) verändert, insbesondere vergrößert wird.

25. Verfahren nach Anspruch 24, **dadurch gekennzeichnet, dass** die Änderung des Durchmessers des Leitungsendes (2) entlang einer kurvenförmigen Bahn erfolgt, die durch das Profil des Anschlusses (1) bestimmt ist.

26. Verfahren nach einem der Ansprüche 20 bis 25, **dadurch gekennzeichnet, dass** im ersten Schritt die im Wesentlichen lineare Relativbewegung mit einer relativen Relativbewegung zum Anwärmen des Leitungsendes (2) und des Anschlusses (1) überlagert wird.

27. Verfahren nach wenigstens einem der Ansprüche 15 bis 26, **dadurch gekennzeichnet, dass** der Durchmesser des Leitungsendes (2) vor dem Verbinden mit dem Anschluss (1) der Verbindungsvorrichtung geändert, insbesondere vergrößert, wird.

28. Verfahren nach Anspruch 27, **dadurch gekennzeichnet, dass** beim Ändern des Durchmessers des Leitungsendes (2) unterschiedliche Durchmesser in Längsrichtung des Leitungsendes (2) gebildet werden.

29. Verfahren nach Anspruch 27 oder 28, **dadurch gekennzeichnet, dass** der Durchmesser des Leitungsendes (2) so vergrößert wird, dass der Durchmesser einer Außenfläche (2a) des Leitungsendes (2) etwas größer gebildet wird als der Durchmesser einer mit der Außenfläche (2a) des Leitungsendes (2) in Kontakt kommenden Innenfläche (1a) des Anschlusses (1).

30. Verfahren nach wenigstens einem der Ansprüche 15 bis 29, **dadurch gekennzeichnet, dass** Kontaktflächen des Leitungsendes (2) und/oder des Anschlusses (1) mit einem Gleitmittel zumindest bereichsweise versehen werden.

## Claims

1. Device for connecting lines to a connector (1) that is adapted for connection to a line end (2) by means of friction welding, the device being rotationally symmetrical with regard to the central axis (M) thereof, the connector (1) comprising an inner space (5) for receiving the line end (2), which inner space corresponds to an annular gap (5) between an inner connection piece (3) and an outer connection piece (4) that is substantially concentric to the inner connection piece (3), the inner connection piece (3) comprising an intake region (6) for guiding the line end (2) to the connector (1) when the line end (2) is inserted and comprising a holding region (7) for secure connection between the connector (1) and the line end (2), the weld produced by friction welding being arranged in the holding region (7), the diameter of the holding region (7) being larger than the diameter of the intake region (6), the intake region (6) being arranged upstream of the holding region (7) in a direction of extension (E) of the line end (2), **characterized in that** a curved transition region (8) is provided between the intake region (6) and the holding region (7), which transition region compensates for the difference in diameter between the intake region (6) and the holding region (7), the connector (1) comprising at least one radial opening (10) for removing the molten material that can be produced by friction welding from the region in which said material is formed, which opening connects a region (5a) of the inner space (5) of the connector (1) that is arranged downstream in the direction of extension (E) to an outer surface (4b) of the connector (1).

2. Device according to claim 1, **characterized in that** the connector (1) comprises at least one recess (9), which extends substantially in the longitudinal direction X of the connector (1) at least in portions.

3. Device according to claim 2, **characterized in that** the recess (9) extends in parallel with the longitudinal direction X of the connector (1).

4. Device according to claim 2, **characterized in that** the recess (9) extends at an angle to the longitudinal direction X of the connector (1).

5. Device according to claim 2, **characterized in that** the recess (9) is spiral.

6. Device according to at least one of claims 2 to 5, **characterized in that** two, three or four recesses (9) are arranged on the periphery of the connector (1) so as to be equidistantly spaced.

7. Device according to at least one of claims 2 to 6, **characterized in that** the connector (1) comprises an inner connection piece (3), in the outer surface (3a) of which there is at least one recess (9).

8. Device according to at least one of claims 2 to 6, **characterized in that** the connector (1) comprises an outer connection piece (4), in the inner surface (4a) of which there is at least one recess (9).

9. Device according to at least one of claims 1 to 8, **characterized in that** the connector (1) comprises at least one pocket-shaped recess, which is connected to the region in which the molten material is formed in order to receive said molten material.

10. Device according to at least one of claims 1 to 9, **characterized in that** a plurality of, in particular two, three or four, radial openings (10) are arranged on the periphery of the connector (1) so as to be equidistantly spaced.

11. Device according to at least one of claims 1 to 10, **characterized in that** the connector (1) comprises means for controlling the region in which the molten material that can be produced by friction welding is formed.

12. Device according to at least one of claims 1 to 11, **characterized in that** the outer surface (3a) of the inner connection piece (3) is provided with a lubricant at least in regions.

13. Device according to at least one of claims 1 to 12, **characterized in that** the inner surface (4a) of the outer connection piece (4) is provided with a lubricant at least in regions.

14. Motor vehicle comprising a device according to at least one of claims 1 to 13.

15. Method for connecting lines, comprising the steps of:
- connecting a line end (2) to a connector (1) of a connecting device for lines by means of friction welding, the connecting device being rotationally symmetrical with regard to the central axis (M) thereof;
the method **characterized by**
- receiving the line end (2) in an inner space (5) of the connector (1), which inner space corresponds to an annular gap (5) between an inner connection piece (3) and an outer connection piece (4) that is substantially concentric to the inner connection piece (3),
the inner connection piece (3) comprising an intake region (6) for guiding the line end (2) to the connector (1) when the line end (2) is inserted and comprising a holding region (7) for secure connection between the connector (1) and the line end (2), the weld produced by friction welding being arranged in the holding region (7), the diameter of the holding region (7) being larger than the diameter of the intake region (6), the intake region (6) being arranged upstream of the holding region (7) in a direction of extension (E) of the line end (2), a curved transition region (8) being provided between the intake region (6) and the holding region (7), which transition region compensates for the difference in diameter between the intake region (6) and the holding region (7);
- removing, in a controlled manner, the molten material produced during friction welding from the region in which said molten material is formed through at least one radial opening (10) that connects a region (5a) of the inner space (5) of the connector (1) that is arranged downstream in the direction of extension (E) to an outer surface (4b) of the connector (1).

16. Method according to claim 15, **characterized in that** when the molten material is removed, said material is channeled through at least one recess (9) in the connector (1) substantially in the longitudinal direction of the connector (1).

17. Method according to either claim 15 or claim 16, **characterized in that** during friction welding, the connector (1) is ventilated in order to reduce pressure.

18. Method according to at least one of the preceding claims 15 to 17, **characterized by** the step of controlling the region in which the molten material produced during friction welding is formed.

19. Method according to any of claims 15 to 18, **characterized in that** contact pressure is produced between the line end (2) and the connector (1) substantially locally in the region in which the molten material is formed.

20. Method according to any of claims 15 to 19, **characterized in that** the line end (2) and the connector (1) are joined in a first step by a substantially linear relative movement, the line end (2) and the connector (1) being moved relative to one another as far as a predetermined position or until a predetermined resistance is achieved and, in a second step, being welded under pressure by a substantially rotary relative movement.

21. Method according to claim 20, **characterized in that** the substantially linear relative movement is path-controlled.

22. Method according to claim 21, **characterized in that** the substantially linear relative movement is path-controlled depending on the wall thickness and/or the diameter of the line end (2).

23. Method according to claim 22, **characterized in that** the distance that is determined by the path-controlled, substantially linear relative movement is reduced as the wall thickness of the line end (2) increases.

24. Method according to at least one of claims 20 to 23, **characterized in that** in the first step, a diameter of the line end (2) is changed, in particular increased.

25. Method according to claim 24, **characterized in that** the diameter of the line end (2) is changed along a curved path that is determined by the profile of the connector (1).

26. Method according to any of claims 20 to 25, **characterized in that** in the first step, the substantially linear relative movement is superposed by a relative relative movement for heating the line end (2) and the connector (1).

27. Method according to at least one of claims 15 to 26, **characterized in that** the diameter of the line end (2) is changed, in particular increased, before connection to the connector (1) of the connecting device.

28. Method according to claim 27, **characterized in that** when the diameter of the line end (2) is changed, various diameters are formed in the longitudinal direction of the line end (2).

29. Method according to either claim 27 or claim 28, **characterized in that** the diameter of the line end (2) is increased such that the diameter of an outer surface (2a) of the line end (2) is slightly larger than the diameter of an inner surface (1a) of the connector (1) that comes into contact with the outer surface (2a) of the line end (2).

30. Method according to at least one of claims 15 to 29, **characterized in that** contact surfaces of the line end (2) and/or of the connector (1) are provided with a lubricant at least in regions.

## Revendications

1. Dispositif permettant de connecter des conduites à l'aide d'un raccord (1) qui est adapté pour la connexion à une extrémité de conduite (2) par soudage par friction, le dispositif étant réalisé de manière à présenter une symétrie de révolution par rapport à son axe médian (M), le raccord (1) comprenant un espace intérieur (5) servant à recevoir l'extrémité de conduite (2), lequel espace intérieur correspond à un interstice annulaire (5) entre une tubulure intérieure (3) et une tubulure extérieure (4) disposée de manière sensiblement concentrique par rapport à la tubulure intérieure (3), la tubulure intérieure (3) étant réalisée avec une région d'entrée (6) servant au guidage de l'extrémité de conduite (2) lors de l'enfichage de l'extrémité de conduite (2) sur le raccord (1) et avec une région de retenue (7) servant à la connexion sûre entre le raccord (1) et l'extrémité de conduite (2), le point de soudure produit par le soudage par friction étant disposé dans la région de retenue (7), le diamètre de la région de retenue (7) étant supérieur au diamètre de la région d'entrée (6), la région d'entrée (6) étant située en amont de la région de retenue (7) dans une direction d'enfichage (E) de l'extrémité de conduite (2), **caractérisé en ce qu'**une région de transition (8) incurvée est prévue entre la région d'entrée (6) et la région de retenue (7), laquelle région de transition compense la différence de diamètre entre la région d'entrée (6) et la région de retenue (7), le raccord (1) comprenant au moins une ouverture radiale (10) servant à l'évacuation de la masse fondue pouvant être produite par le soudage par friction hors de sa région de formation, laquelle ouverture connecte une région arrière (5a) de l'espace intérieur (5) du raccord (1) dans la direction d'enfichage (E) avec une surface extérieure (4b) du raccord (1).

2. Dispositif selon la revendication 1, **caractérisé en ce que** le raccord (1) comprend au moins un évidement (9) qui s'étend au moins dans certaines parties sensiblement dans la direction longitudinale X du raccord (1).

3. Dispositif selon la revendication 2, **caractérisé en ce que** l'évidement (9) s'étend parallèlement à la direction longitudinale X du raccord (1).

4. Dispositif selon la revendication 2, **caractérisé en ce que** l'évidement (9) s'étend suivant un angle par rapport à la direction longitudinale X du raccord (1).

5. Dispositif selon la revendication 2, **caractérisé en ce que** l'évidement (9) est réalisé en forme de spirale.

6. Dispositif selon au moins l'une des revendications 2 à 5, **caractérisé en ce que** deux, trois ou quatre évidements (9) sont disposés de manière espacée de façon équidistante sur la périphérie du raccord (1).

7. Dispositif selon au moins l'une des revendications 2 à 6, **caractérisé en ce que** le raccord (1) comporte une tubulure intérieure (3) dans la surface extérieure (3a) de laquelle est prévu au moins un évidement (9).

8. Dispositif selon au moins l'une des revendications 2 à 6, **caractérisé en ce que** le raccord (1) comporte une tubulure extérieure (4) dans la surface intérieure (4a) de laquelle est prévu au moins un évidement (9).

9. Dispositif selon au moins l'une des revendications 1 à 8, **caractérisé en ce que** le raccord (1) comprend au moins un évidement en forme de poche qui est connecté à la région de formation pour recevoir de la masse fondue.

10. Dispositif selon au moins l'une des revendications 1 à 9, **caractérisé en ce que** plusieurs, en particulier deux, trois ou quatre ouvertures radiales (10) sont disposées de manière espacée de façon équidistante sur la périphérie du raccord (1).

11. Dispositif selon au moins l'une des revendications 1 à 10, **caractérisé en ce que** le raccord (1) comprend des moyens de commande de la région de formation de la masse fondue pouvant être produite par le soudage par friction.

12. Dispositif selon au moins l'une des revendications 1 à 11, **caractérisé en ce que** la surface extérieure (3a) de la tubulure intérieure (3) est dotée d'un lubrifiant au moins dans certaines régions.

13. Dispositif selon au moins l'une des revendications 1 à 12, **caractérisé en ce que** la surface intérieure (4a) de la tubulure extérieure (4) est dotée d'un lubrifiant au moins dans certaines régions.

14. Véhicule automobile comprenant un dispositif selon au moins l'une des revendications 1 à 13.

15. Procédé permettant de connecter des conduites comprenant l'étape de :
- connexion d'une extrémité de conduite (2) avec un raccord (1) d'un dispositif de connexion pour conduites par soudage par friction, le dispositif de connexion étant réalisé de manière à présenter une symétrie de révolution par rapport à son axe médian (M) ;
**caractérisé par**
- la réception de l'extrémité de conduite (2) dans un espace intérieur (5) du raccord (1), lequel espace intérieur correspond à un interstice annulaire (5) entre une tubulure intérieure (3) et une tubulure extérieure (4) disposée de manière sensiblement concentrique par rapport à la tubulure intérieure (3),
la tubulure intérieure (3) étant réalisée avec une région d'entrée (6) servant au guidage de l'extrémité de conduite (2) lors de l'enfichage de l'extrémité de conduite (2) sur le raccord (1) et avec une région de retenue (7) servant à la connexion sûre entre le raccord (1) et l'extrémité de conduite (2), le point de soudure produit par le soudage par friction étant disposé dans la région de retenue (7), le diamètre de la région de retenue (7) étant supérieur au diamètre de la région d'entrée (6), la région d'entrée (6) étant située en amont de la région de retenue (7) dans une direction d'enfichage (E) de l'extrémité de conduite (2), une région de transition (8) incurvée étant prévue entre la région d'entrée (6) et la région de retenue (7), laquelle région de transition compense la différence de diamètre entre la région d'entrée (6) et la région de retenue (7) ;
- l'évacuation commandée de la masse fondue formée lors du soudage par friction hors de sa région de formation à travers au moins une ouverture radiale (10) qui connecte une région arrière (5a) de l'espace intérieur (5) du raccord (1) dans la direction d'enfichage (E) avec une surface extérieure (4b) du raccord (1).

16. Procédé selon la revendication 15, **caractérisé en ce que** la masse fondue est canalisée sensiblement dans la direction longitudinale du raccord (1) lors de l'évacuation à travers au moins un évidement (9) dans le raccord (1).

17. Procédé selon la revendication 15 ou 16, **caractérisé en ce que** le raccord (1) est aéré lors du soudage par friction pour la réduction de pression.

18. Procédé selon au moins l'une des revendications précédentes 15 à 17, **caractérisé par** l'étape de commande de la région de formation de la masse fondue formée lors du soudage par friction.

19. Procédé selon l'une des revendications 15 à 18, **caractérisé en ce qu'**une pression de serrage est produite entre l'extrémité de conduite (2) et le raccord (1) sensiblement localement dans la région de formation de la masse fondue.

20. Procédé selon l'une des revendications 15 à 19, **caractérisé en ce que** l'extrémité de conduite (2) et le raccord (1) sont assemblés lors d'une première étape par un déplacement relatif sensiblement linéaire, l'extrémité de conduite (2) et le raccord (1) étant déplacés l'un par rapport à l'autre jusqu'à une position prédéfinie ou jusqu'à ce qu'une résistance prédéfinie soit atteinte et étant soudés sous pression lors d'une deuxième étape par un déplacement relatif sensiblement rotatif.

21. Procédé selon la revendication 20, **caractérisé en ce que** le déplacement relatif sensiblement linéaire est à course commandée.

22. Procédé selon la revendication 21, **caractérisé en ce que** la commande de course du déplacement relatif sensiblement linéaire s'effectue en fonction de l'épaisseur de paroi et/ou du diamètre de l'extrémité de conduite (2).

23. Procédé selon la revendication 22, **caractérisé en ce que** la distance qui est déterminée par le déplacement relatif sensiblement linéaire à course commandée est réduite au fur et à mesure que l'épaisseur de paroi de l'extrémité de conduite (2) augmente.

24. Procédé selon au moins l'une des revendications 20 à 23, **caractérisé en ce que**, lors de la première étape, un diamètre de l'extrémité de conduite (2) est modifié, en particulier accru.

25. Procédé selon la revendication 24, **caractérisé en ce que** la modification du diamètre de l'extrémité de conduite (2) s'effectue le long d'une trajectoire incurvée qui est déterminée par le profil du raccord (1).

26. Procédé selon l'une des revendications 20 à 25, **caractérisé en ce que**, lors de la première étape, le déplacement relatif sensiblement linéaire est superposé à un déplacement relatif relatif pour réchauffer l'extrémité de conduite (2) et le raccord (1).

27. Procédé selon au moins l'une des revendications 15 à 26, **caractérisé en ce que** le diamètre de l'extrémité de conduite (2) est modifié, en particulier accru, avant la connexion au raccord (1) du dispositif de connexion.

28. Procédé selon la revendication 27, **caractérisé en ce que**, lors de la modification du diamètre de l'extrémité de conduite (2), différents diamètres sont formés dans la direction longitudinale de l'extrémité de conduite (2).

29. Procédé selon la revendication 27 ou 28, **caractérisé en ce que** le diamètre de l'extrémité de conduite (2) est accru de telle sorte que le diamètre d'une surface extérieure (2a) de l'extrémité de conduite (2) soit quelque peu supérieur au diamètre d'une surface intérieure (1a) du raccord (1) venant en contact avec la surface extérieure (2a) de l'extrémité de conduite (2).

30. Procédé selon au moins l'une des revendications 15 à 29, **caractérisé en ce que** des surfaces de contact de l'extrémité de conduite (2) et/ou du raccord (1) sont dotées d'un lubrifiant au moins dans certaines régions.
